# EUROPÄISCHE PATENTSCHRIFT

(11) **EP 1 918 329 B1**
(45) Veröffentlichungstag und Bekanntmachung des Hinweises auf die Patenterteilung: **09.12.2009**
(21) Anmeldenummer: 07020761.8
(22) Anmeldetag: 24.10.2007
(51) Int. Cl.: C08L 97/02, C08L 1/02, B43K 19/14

(54) **Thermoplastische Formmasse und daraus hergestellter Formkörper**
Thermoplastic moulding material and moulded parts made thereof
Masse de formage thermoplastique et corps de formage fabriqué à l'aide de celle-ci

(30) Priorität: 31.10.2006 EP 06022696
(43) Veröffentlichungstag der Anmeldung: 07.05.2008
(73) Patentinhaber: Faber-Castell AG, 90546 Stein (DE)
(72) Erfinder: Appel, Reiner, 90522 Oberasbach (DE); von Godin, Harald, 90522 Oberasbach (DE); Lugert, Gerhard, Dr., 90431 Nürnberg (DE)
(74) Vertreter: Mörtel & Höfner

(56) Entgegenhaltungen:
- DE-A- 1 770 777
- DE-A1- 1 956 625
- DE-A1- 19 855 325
- US-A- 2 988 784

## Beschreibung

Die Erfindung betrifft eine thermoplastische Formmasse mit einer Polymermatrix und einem darin eingebetteten Füllstoff und einem daraus hergestellten Formkörper. Die Formmassen bzw. die sich daraus ergebenden Werkstoffe werden auch als Compounds bezeichnet. Um hohe Festigkeiten zu erreichen werden faserartige Füllstoffe eingesetzt. Zur Herstellung von Formkörpern ist ein Schmelzen der Polymermatrix und eine innige Vermischung mit den Füllstoffen erforderlich. Wenn, wie erfindungsgemäß vorgesehen, holzartige Compounds erzeugt werden sollen, bieten sich cellulosehaltige Fasern oder vollständig aus Cellulose bestehende Fasern(im folgenden vereinfachend mit Cellulosefasern bezeichnet), beispielsweise Holzmehl oder aus sonstigen verholzten Pflanzenteilen gewonnene Fasern an. Problematisch dabei ist, dass die zum Schmelzen der Polymermatrix erforderliche Temperatur bei herkömmlichen Polymeren wie etwa Polycarbonat oder Polypropylen so hoch ist, dass die Gefahr einer Schädigung der Cellulosefasern besteht. Damit ein fester Verbund zwischen Fasern und Polymermatrix erhalten wird, muss das Polymermaterial eine feste Haftverbindung mit den Fasern eingehen, was aufgrund des eher hydrophilen Charakters der Cellulosefasern und des eher hydrophoben Charakters herkömmlicher Polymermatrizes den Einsatz von Haftvermittlern erfordert. Dadurch erhöht sich der Material- und Kostenaufwand für die Herstellung von Formkörpern. Außerdem sind Haftvermittler meist gesundheitlich bedenkliche Substanzen, die in Gebrauchsgegenständen, beispielsweise in Stiftumhüllungen, unerwünscht sind. Hinzu kommt, dass Cellulosefasern wegen ihres hydrophilen Charakters eine Restfeuchtigkeit aufweisen, die einer festen Verankerung der Fasern in der Polymermatrix ebenfalls entgegenwirken, so dass eine aufwändige Trocknung der Fasern erforderlich ist. Schließlich ist noch problematisch, dass mit einer herkömmlichen Polymermatrix zwar ausreichende Festigkeiten und Steifigkeiten erreicht werden können, nicht jedoch weitere, den Werkstoff Holz auszeichnende Eigenschaften, etwa Oberflächenstruktur und Haptik oder auch das Verhalten bei einer spanenden Bearbeitung, man denke etwa an das Spitzen von Stiften.

Aufgabe der Erfindung ist es eine Formmasse, die sich bei niedriger Schmelz- bzw. Compoundierungstemperatur zu Formkörpern mit holzähnlichen Eigenschaften verarbeiten, insbesondere extrudieren lässt, sowie einen Formkörper mit holzähnlichen Eigenschaften vorzuschlagen.

DE 1 956 625 A offenbart (Beispiel 2) eine Formmasse, die 500 Teile Holzmehl mit einer Feuchtigkeit unter 1 Gew.%, 500 Teile Ethylen-Homopolymer und 300 Teile eines Polyethylenwachses (Schmelzbereich von 97 bis 110°C) enthält. Diese Mischung wird in einem Extruder bei 140°C aufgeschmolzen und zu einem Band extrudiert, das man in Streifen zerschneidet. Diese Streifen werden in einer Presse zu einer Platte verpresst.

DE 1 770 777 A offenbart (Seite 8, Zeile 26 - Seite 9, Zeile 7 ; Anspr. 1) ein hydrophile Gruppen aufweisendes Ethylen-Copolymer-Wachse, das Anwendung als Schmelzkleber für Holz findet.

US-A-2 988 784 offenbarteine Formmasse, die Holzmehl (aufwendig getrocknet, siehe Spalte 7, Zeile 73 - Spalte 8, Zeile 2), Wachs(e) und einen Thermoplast (PVC) enthält. Diese Mischung wird in einem Extruder bei 120°C bis 160°C extrudiert zu Herstellung von Ummantelung von Stiften (Beispiele 1 und 12).

Diese Aufgabe wird durch eine thermoplastische Formmasse nach Anspruch 1 und einen Formkörper nach Anspruch 12 gelöst. Eine erfindungsgemäße Formmasse enthält 10 Gew.% bis 35 Gew.% eines hydrophile Gruppen aufweisenden Ethylen-Copolymer-Wachses mit einem Schmelzpunkt von 75 °C bis 110 °C und Cellulose enthaltende oder aus Cellulose bestehende Fasern mit einem Anteil von 45 Gew.% bis 90 Gew.%, vorzugsweise 60 Gew.% bis 90 Gew.% (bezogen auf die Trockenmasse der Fasern). Nach einer großen Vielzahl von Versuchen zeigte sich völlig überraschend, dass eine Formmasse aus Ethylen-Copolymer-Wachs der angegebenen Art und Cellulosefasern einen Werkstoff ergibt, der eine mit Holz vergleichbare Festigkeit und Steifigkeit aufweist, der sich leicht spanend bearbeiten lässt und ein holzähnliches optisches und haptisches Erscheinungsbild aufweist. Aufgrund des niedrigen Schmelzpunktes bzw. Schmelzbereiches der eingesetzten Polymermatrix ist eine entsprechend niedrige Verarbeitungstemperatur für Compoundierung und Extrusion oder sonstige Formgebung möglich, so dass die Cellulosefasern thermisch kaum beansprucht werden. Die niedrige Verarbeitungstemperatur gestattet außerdem die Zugabe von temperaturempfindlichen Zusatzstoffen wie beispielsweise Holzaromen. Vorzugsweise werden daher Ethylen-Copolymer-Wachse mit einem Schmelzpunkt bzw. Schmelzbereich von 75 °C bis 85 °C eingesetzt. Überraschend ist auch, dass sich die polare Gruppen (OH-Gruppen) aufweisenden Cellulosefasern auch ohne Zugabe von Haftvermittlern fest mit der aus dem Ethylen-Copolymer-Wachs gebildeten Polymermatrix verbinden. Dabei war ein weiterer überraschender Effekt, dass eine feste Verbindung auch mit Fasern zu beobachten ist, die noch einen Restfeuchtegehalt, etwa bis 15 Gew.%, aufweisen. Eine vorherige energieaufwändige Trocknung der Fasern, etwa von Sägespänen oder Holzmehl, ist daher nicht erforderlich. Die Festigkeit eines Compounds kann auch durch die Länge der verwendeten Cellulosefasern beeinflusst werden. Vorzugsweise werden im Falle von reiner Cellulose Fasern mit einer Länge von 70 µm bis 800µm, insbesondere von 70 µm bis 150 µm gewählt. Im Falle von Holzspänen ist eine Faserlänge von etwa 1 mm bis 2 mm zweckmäßig.

Neben den Cellulosefasern kann ein Füllstoff, insbesondere ein anorganischer Füllstoff, vorzugsweise Glimmer, Talkum und/oder Kaolin vorhanden sein, um beispielsweise das spezifische Gewicht eines Formkörpers oder dessen Konsistenz zu verändern. Dabei ist ein max. Gehalt von 10 Gew.% zweckmäßig, da bei darüber hinausgehenden Gehalten das durch das System Ethylen-Copolymer-Wachs / Cellulosefasern erreichte Eigenschaftsprofil, insbesondere die Bruchfestigkeit zu stark verändert werden könnte.

Zur Verbesserung der Fließeigenschaften der Formmasse während der Extrusion ist es vorteilhaft, ein Gleitmittel aus der Gruppe Wachse, Öle und Fettsäurederivate beizumengen, wobei die Aufnahmekapazität des genannten Matrix-Systems bei 15 Gew.% erreicht ist. Darüber hinaus ergeben sich vor allem durch die Verwendung von Fettsäurederivaten, insbesondere von Calciumstearat, glatte Oberflächen.

Aus der oben beschriebenen Formmasse werden Formkörper vorzugsweise durch Extrusion hergestellt. Dabei kann entweder eine physikalische Mischung der Ausgangsstoffe, also im Wesentlichen pulver- oder granulatförmiges Ethylen-Copolymer-Wachs und Cellulosefasern etwa in einem Schneckenextruder compoundiert und extrudiert werden. Denkbar ist aber auch, dass die Formmasse zunächst compoundiert und granuliert wird, wobei das so erhaltene Granulat gegebenenfalls nach einer Zwischenlagerung extrudiert oder mit einem sonstigen Formverfahren verarbeitet wird.

Für den Fall, dass Formkörper mit einer größeren Härte hergestellt werden sollen, kann dies durch Zusatz von oxidiertem Polyethylen erreicht werden. Dabei zeigen Gehalte unter 0,1 Gew.% kaum noch einen Effekt. Bei Gehalten von mehr als 8 Gew.% gestaltet sich die spanende Bearbeitung eines Formkörpers zunehmend schwieriger, was beispielsweise im Falle von spitzbaren Stiftumhüllungen nachteilig ist. Festigkeit und Härte lassen sich in gewissem Ausmaß auch durch Zugabe von Harzen natürlicher oder synthetischer Art einstellen, wobei ein Harzanteil von max. 5 Gew. % eingehalten werden sollte.

Bevorzugte Harze sind Lignin, Bakelite und Keton-Aldehyd-Kondensationsharze.

Aus der beschriebenen Formmasse lassen sich prinzipiell beliebige Körper bzw. Gegenstände und auf besonders einfache Weise Strangprofile wie Profilleisten für Möbel herstellen. Ganz besonders eignet sich die Formmasse für Ummantelungen von Stiften. Diese sind üblicherweise aus Holz gefertigt. Holz als Naturprodukt hat je nach Wachstumsbedingungen und Standort oft unterschiedliche Eigenschaften, was das Einhalten von Qualitätsstandards erschwert. Holz lässt sich zwar leicht lasieren oder lackieren. Ein Durchfärbung über die gesamte Dicke einer Stiftumhüllung oder auch eines anderen Körpers lässt sich dagegen nur äußerst schwierig erreichen, insbesondere wenn eine Schwarzfärbung vorgesehen ist. Auch ist das Herstellen üblicher holzgefasster Stifte relativ aufwändig. Ausgangspunkt sind Holzbrettchen in deren eine Flachseite parallele und seitlich beabstandet Nuten eingefräst werden. In die Nuten werden Minen eingelegt und auf das minenbestückte Brettchen ein zweites, ebenfalls mit Nuten versehenes Brettchen aufgeleimt. Schließlich werden aus dem so erhaltenen Verbund Stiftrohlinge herausgearbeitet und zu den endgültigen, beispielsweise eine runde oder sechseckige Querschnittsform aufweisenden Stiften weiterbearbeitet. Viel einfacher ist dagegen die Extrusion der erfindungsgemäßen Formmasse. Die extrudierten Stränge müssen lediglich noch abgelängt und mit Minen versehen werden. Der letztgenannte Arbeitsschritt kann entfallen, wenn Umhüllung und Mine in einem Arbeitsgang durch eine Coextrusion hergestellt werden. Die erfindungsgemäßen Formmassen sind dafür geradezu prädestiniert, weil sie aufgrund ihrer geringen Verarbeitungstemperatur eine schonende Extrusion insbesondere temperaturempfindlicher Minenmassen, etwa für Farb- und insbesondere für Kosmetikstifte, erlauben. Natürlich kann auch die herkömmliche Herstellungsweise mit Brettchen Verwendung finden, beispielsweise weil entsprechende Anlagen vorhanden sind und genutzt werden sollen. Dabei werden anstelle von Umhüllungen Brettchen extrudiert und auf übliche Weise weiterverarbeitet.

Die aus den vorgeschlagenen Formmassen erhaltenen Formkörper weisen eine Festigkeit, Bruchstabilität und Flexibilität auf, die an natürliches Holz erinnert. Sie lassen sich, ähnlich wie Holz, spanend bearbeiten, Stiftumhüllungen lassen sich leicht und mit gleichmäßiger Spanbildung spitzen. Besonders vorteilhaft ist, dass die Ummantelungen nicht wie Holzummantelungen austrocknen und schrumpfen, wodurch die Gefahr besteht, dass sich die Mine lockert und aus der Umhüllung herausfällt.

Eine Durchfärbung der Umhüllung, was insbesondere im Kosmetikbereich gewünscht ist, ist ohne weiteres mit nahezu beliebigen Farbnuancen durch Zumengen entsprechender Farbstoffe und/oder Farbpigmente erreichbar. Zur Durch- oder Einfärbung nicht nur bei Stiftumhüllungen können sowohl anorganische Pigmente, insbesondere Ruß, Eisenoxide, Ultramarin, Ferriferrocyanid, als auch organische Pigmente, insbesondere Phthalocyanin-Pigmente, Azo-Pigmente und Chinacridon-Pigmente eingesetzt werden.

Die mit den beschriebenen Formmassen herzustellende Profile können durch direktes Einbringen der Ausgangsstoffe in einen Extruder hergestellt werden, wobei in diesem die erforderliche Compoundierung, also das Aufschmelzen und die innige Durchmischen von Polymermatrix, Fasern und gegebenenfalls weiteren Zusatzstoffen erfolgt. Natürlich kann die Compoundierung in einem separaten Schritt etwa mit einem Schnellmischer oder einem Zweischnecken-extruder erfolgen. Bei der Verarbeitung werden in jedem Falle Temperaturen im Bereich von 80 °C bis 170 °C, vorzugsweise im Bereich von 90 °C bis 140 °C eingehalten.

### Beispiel 1:

Formmasse für holzfarbig eingefärbte Profilleisten

| | |
|---|---|
| Ethylen-Copolymer-Wachs | |
| (Luwax EAS 5) ¹⁾ | 28 Gewichtsteile |
| Cellulosefasern | |
| (Lignoflok C 750) ²⁾ | 78,8 Gewichtsteile |

Lignoflok C 750 enthält ca. 8,6 % Feuchte, daraus folgt eine Trockenmasse von 72,0 Gewichtsteilen.

### Beispiel 2:

Formmasse für schwarz eingefärbte Bleistiftumhüllungen

| | |
|---|---|
| Ethylen-Copolymer-Wachs | |
| (Luwax EAS 3) ¹⁾ | 22,0 Gewichtsteile |
| Oxidiertes Polyethylen | |
| (PED 121) ³⁾ | 4,0 Gewichtsteile |
| Rußpartikel | |
| (Printex U) ⁴⁾ | 2,0 Gewichtsteile |
| Cellulosefasern | |
| (Arbocel C 100) ²⁾ | 78,8 Gewichtsteile |

Das Fasermaterials hat eine Feuchtigkeit von 8,6 %. Daraus folgt eine Trockenmasse von 72,0 Gewichtsteilen.

### Beispiel 3:

Formmasse für Möbelleisten mit schwarzer Einfärbung

| | |
|---|---|
| Ethylen-Copolymer-Wachs | |
| (Luwax EAS 5) ¹⁾ | 19,0 Gewichtsteile |
| Castor-Wachs | 1,5 Gewichtsteile |
| Calciumstearat | 1,5 Gewichtsteile |
| Rußpartikel | |
| (Printex A) ⁴⁾ | 2,0 Gewichtsteile |
| Cellulosefasern | |
| (Arbocel C 32/10) ⁵⁾ | 83,3 Gewichtsteile |

Das Fasermaterial hat hier eine Feuchtigkeit von 8,8 Gew.%. Daraus folgt eine Trockenmasse von 76,0 Gewichtsteilen.

Bei allen Beispielen werden die Rohmaterialien auf Zweischneckenextruder einzeln in der rezepturgemäßen Menge aufgebracht und daraus Profile (Profilleisten, Möbelleisten bzw. Stiftumhüllungen) extrudiert. Die Extrusionstemperatur beträgt ca. 140 °C. Bei dieser Temperatur verflüchtigt sich zumindest ein Teil der in den Fasern vorhandenen Wassers.

Hersteller:
1) BASF, D-67056 Ludwigshafen;
2) J. Rettenmeier & Söhne GmbH & Co KG, D-73494 Rosenberg;
3) CLARIANT AG, D-65926 Frankfurt/Main
4) Degussa, D-60311 Frankfurt/Main

## Patentansprüche

1. Thermoplastische Formmasse, mit einer Polymermatrix und darin eingebetteten Cellulose enthaltenden Fasern, wobei die Polymermatrix zum überwiegenden Teil oder ganz aus einem hydrophile Gruppen aufweisenden Ethylen-Copolymer-Wachs mit einem Schmelzpunkt von 75 °C bis 110 °C gebildet ist, und in der Formmasse 10 Gew.% bis 35 Gew.% des Ethylen-Copolymer-Wachses und 45 Gew.% bis 90 Gew.% Cellulose enthaltenden Fasern- bezogen auf die Trockenmasse der Fasern - enthalten sind.

2. Formmasse nach Anspruch 1,
**gekennzeichnet durch**
einen Anteil von 60 Gew.% bis 90 Gew.% Fasern - bezogen auf die Trockenmasse der Fasern.

3. Formmasse nach Anspruch 1 oder 2,
**gekennzeichnet durch**
ein Ethylen-Copolymer-Wachs mit einem Schmelzpunkt von 75 °C bis 85°C.

4. Formmasse nach einem der vorhergehenden Ansprüche,
**dadurch gekennzeichnet,**
**dass** neben den Fasern wenigstens ein Füllstoff vorhanden ist.

5. Formmasse nach Anspruch 4,
**dadurch gekennzeichnet,**
**dass** wenigstens ein anorganischer Füllstoff enthalten ist.

6. Formmasse nach Anspruch 4 oder 5,
**dadurch gekennzeichnet,**
**dass** max. 10 Gew.% Füllstoff enthalten ist.

7. Formmasse nach einem der vorhergehenden Ansprüche,
**dadurch gekennzeichnet,**
**dass** sie ein Gleitmittel enthält.

8. Formmasse nach Anspruch 7,
**dadurch gekennzeichnet,**
**dass** sie wenigstens ein Gleitmittel aus der Gruppe Wachse, Öle und Fettsäurederivate enthält.

9. Formmasse nach Anspruch 7 oder 8,
**gekennzeichnet durch**
einen Anteil an Gleitmittel von max. 15 Gew.%.

10. Formmasse nach einem der vorhergehenden Ansprüche,
**dadurch gekennzeichnet,**
**dass** oxidiertes Polyethylen enthalten ist.

11. Formmasse nach Anspruch 10,
**dadurch gekennzeichnet,**
**dass** der Anteil an oxidiertem Polyethylen 0,1 Gew.% bis 8 Gew.% beträgt.

12. Formkörper, erhalten durch Extrusion einer Formmasse nach einem der vorhergehenden Ansprüche.

13. Formkörper nach Anspruch 12,
**dadurch gekennzeichnet,**
**dass** er eine Ummantelung für einen Schreib-, Zeichen-, Mal- oder Kosmetikstift ist.

14. Formkörper nach einem der vorhergehenden Ansprüche,
**dadurch gekennzeichnet,**
**dass** ein natürliches oder synthetisches Harz enthalten ist.

15. Formkörper nach Anspruch 14,
**gekennzeichnet durch**
einen Harzanteil von max. 5 Gew.%.

## Claims

1. Thermoplastic moulding composition comprising a polymer matrix and cellulose-containing fibres embedded therein, wherein the polymer matrix is predominantly or wholly formed of an ethylene copolymer wax that contains hydrophilic groups and has a melting point of 75°C to 110°C, and the moulding composition includes 10% by weight to 35% by weight of the ethylene copolymer wax and 45% by weight to 90% by weight of cellulose-containing fibres, based on the dry mass of the fibres.

2. Moulding composition according to Claim 1, **characterized by** a proportion of 60% by weight to 90% by weight for the fibres, based on the dry mass of the fibres.

3. Moulding composition according to Claim 1 or 2, **characterized by** an ethylene copolymer wax which has a melting point of 75°C to 85°C.

4. Moulding composition according to any preceding claim, **characterized in that** at least one filler is present in addition to the fibres.

5. Moulding composition according to Claim 4, **characterized in that** at least one inorganic filler is included.

6. Moulding composition according to Claim 4 or 5, **characterized in that** not more than 10% by weight of filler is included.

7. Moulding composition according to any preceding claim, **characterized in that** it includes a lubricant.

8. Moulding composition according to Claim 7, **characterized in that** it includes at least one lubricant from the group consisting of waxes, oils and fatty acid derivatives.

9. Moulding composition according to Claim 7 or 8, **characterized by** a lubricant proportion of not more than 15% by weight.

10. Moulding composition according to any preceding claim, **characterized in that** oxidized polyethylene is included.

11. Moulding composition according to Claim 10, **characterized in that** the proportion of oxidized polyethylene is 0.1% by weight to 8% by weight.

12. Moulded article obtained by extrusion of a moulding composition according to any preceding claim.

13. Moulded article according to Claim 12, **characterized in that** it is a sheath for a writing, drafting, colouring or cosmetic pencil.

14. Moulded article according to any preceding claim, **characterized in that** a natural or synthetic resin is included.

15. Moulded article according to Claim 14, **characterized by** a resin content of not more than 5% by weight.

## Revendications

1. Matière à mouler thermoplastique, comprenant une matrice de polymère et des fibres contenant de la cellulose qui y sont incorporées, la matrice de polymère étant formée pour la partie prépondérante ou entièrement d'une cire de copolymère d'éthylène ayant des groupes hydrophiles et ayant un point de fusion de 75°C à 110°C et dans la matière à mouler sont contenues de 10% en poids à 35% en poids de la cire de copolymère d'éthylène et de 45% en poids à 90% en poids de fibres contenant de la cellulose, rapportés à la masse sèche des fibres.

2. Matière à mouler suivant la revendication 1,
**caractérisée par**
une proportion de 60% en poids à 90% en poids de fibres rapportée à la masse sèche des fibres.

3. Matière à mouler suivant la revendication 1 ou 2,
**caractérisée par** une cire de copolymère d'éthylène ayant un point de fusion de 75°C à 85°C.

4. Matière à mouler suivant l'une des revendications précédentes,
**caractérisée en ce qu'**il y a, outre les fibres, au moins une charge.

5. Matière à mouler suivant la revendication 4,
**caractérisée en ce qu'**elle contient au moins une charge minérale.

6. Matière à mouler suivant la revendication 4 ou 5,
**caractérisée en ce qu'**elle contient au maximum 10% en poids de charge.

7. Matière à mouler suivant l'une des revendications précédentes,
**caractérisée en ce qu'**elle contient un agent lubrifiant.

8. Matière à mouler suivant la revendication 7,
**caractérisée en ce qu'**elle contient au moins un agent lubrifiant choisi dans le groupe des cires, des huiles et des dérivés d'acides gras.

9. Matière à mouler suivant la revendication 7 ou 8,
**caractérisée par** une proportion d'agent lubrifiant de 15% en poids au maximum.

10. Matière à mouler suivant l'une des revendications précédentes,
**caractérisée en ce qu'**elle contient du polyéthylène oxydé.

11. Matière à mouler suivant la revendication 10,
**caractérisée en ce que** la proportion de polyéthylène oxydé représente de 0,1 % en poids à 8% en poids.

12. Pièce moulée obtenue par extrusion d'une matière moulée suivant l'une des revendications précédentes.

13. Pièce moulée suivant la revendication 12,
**caractérisée en ce que** c'est un enrobage pour un crayon d'écriture, un crayon à dessiner, un crayon à peindre ou un crayon cosmétique.

14. Pièce moulée suivant l'une des revendications précédentes,
**caractérisée en ce qu'**elle contient une résine naturelle ou synthétique.

15. Pièce moulée suivant la revendication 14,
**caractérisée par** une proportion de résine de 5% en poids au maximum.
